# FASCICULE DE BREVET EUROPEEN

(11) **EP 0 819 862 B1**
(45) Date de publication et mention de la délivrance du brevet: **11.04.2001**
(21) Numéro de dépôt: 97401566.1
(22) Date de dépôt: 02.07.1997
(51) Int. Cl.: F16D 3/223, B23K 15/08, B23K 15/00

(54) **Installation d'usinage d'une cage à billes d'un joint de transmission homocinétique**
Vorrichtung zur Herstellung eines Kugelkäfigs einer homokinetischen Kupplung
Device for manufacturing a retention cage for a homokinetic coupling

(30) Priorité: 16.07.1996 FR 9608886
(43) Date de publication de la demande: 21.01.1998
(73) Titulaire: AUTOMOBILES PEUGEOT, 75116 Paris (FR); AUTOMOBILES CITROEN, 92200 Neuilly-sur-Seine (FR)
(72) Inventeur: Lesaunier, Marc, 14610 Thaon (FR)
(74) Mandataire: Lanceplaine, Jean-Claude

(56) Documents cités:
- GB-A- 2 206 949
- US-A- 4 942 652
- W.E. MEYER ET AL.: "Electron beam micromachining and welding for device fabrication" PROCEEDINGS OF THE NATIONAL ELECTRONICS CONFERENCE, vol. 25, no. 8-10, décembre 1969, OAK BROOK, ILLINOIS US, pages 834-838, XP002029187

## Description

La présente invention a pour objet une installation d'usinage d'une cage à billes d'un joint de transmission homocinétique.

Les joints de transmission homocinétiques sont destinés à relier deux arbres d'un véhicule automobile, à savoir un demi-arbre moteur transversal et une fusée de rous.

De manière classique, ce joint comprend essentiellement un élément extérieur en forme de cloche solidaire de la fusée et un élément intérieur adapté pour se fixer sur le demi-arbre moteur au moyen, par exemple, de cannelures et d'un circlips.

Les éléments intérieur et extérieur sont montés l'un dans l'autre par l'intermédiaire d'une cage à billes comportant des lumières de retenue desdites billes. Ces billes coopèrent avec des gorges ménagées, d'une part, dans la cavité de l'élément extérieur et, d'autre part, sur la surface périphérique de l'élément intérieur.

Ce type de joint de transmission homocinétique est décrit dans le brevet US-A-4 942 652.

Jusqu'à présent, ce type de cage à billes est réalisé par découpage d'un lopin dans un tube, puis, par formage, d'une part, de la face extérieure du lopin pour lui donner la forme d'une sphère et, d'autre part, de la face intérieure dudit lopin pour lui donner également la forme d'une sphère.

Ensuite, on réalise les lumières de retenue des billes par poinçonnage du lopin et on effectue un traitement thermique de la cage à billes.

Enfin, on effectue un usinage de finition de la sphère extérieure et de la sphère intérieure de ladite cage à billes.

Or, la formation des lumières de retenue des billes par poinçonnage présente des inconvénients.

Dans les joints homocinétiques, la transmission du couple est assurée par les billes guidées dans les fenêtres de la cage et la résistance à la rupture de ces joints est essentiellement déterminée par la résistance à la rupture de ladite cage.

En effet, le poinçonnage engendre dans la cage des déformations qui peuvent détruire les conditions géométriques à obtenir et diminuer la résistance à la rupture de cette cage, car ce poinçonnage peut provoquer des amorces de rupture.

De plus, la rugosité résultant du poinçonnage des lumières de maintien des billes est le plus souvent à l'origine des cas de casse des cages de joints homocinétiques.

Par ailleurs, les lumières réalisées par poinçonnage présentent toutes les mêmes dimensions adaptées pour permettre le démontage de l'élément intérieur de la cage.

Enfin, la réalisation des lumières par poinçonnage nécessite d'avoir un jeu de poinçons différents en fonction des dimensions de la cage et des lumières à obtenir. Ces poinçons doivent être régulièrement réusinés compte tenu des contraintes qu'ils subissent au moment du poinçonnage.

Pour éviter ces inconvénients, on connaît des procédés de découpage au moyen d'un faisceau d'électrons à haute densité d'énergie. Un tel procédé est connu par exemple dans le document W.E. MEYER et Al. "Electron beam micromachining and welding for device fabrication" PROCEEDINGS OF THE NATIONAL ELECTRONICS CONFERENCE, vol. 25, n° 8-10, décembre 1969, OAK BROOK, ILLINOIS US, pages 834-838, XP002029187.

L'invention a pour but d'éviter ces inconvénients en proposant une installation d'usinage des cages à billes de joints homocinétiques présentant une grande souplesse d'usinage et permettant d'optimiser la forme des lumières ainsi que d'obtenir une grande précision d'usinage.

L'invention a donc pour objet une installation d'usinage d'une cage à billes d'un joint de transmission homocinétique, du type comprenant:
- des moyens de découpage d'un lopin dans un tube,
- des moyens de formage de la face extérieure du lopin pour lui donner la forme d'une sphère,
- des moyens de formage de la face intérieure du lopin pour lui donner la forme d'une sphère,
- des movens d'usinage dans le lopin de lumières de retenue des billes, le lopin avec les lumières formant la cage à billes
- des moyens de traitement thermique de la cage à billes,
- et des moyens d'usinage de finition de la sphère extérieure et de la sphère intérieure,
   caractérisé en ce que les moyens d'usinage des lumières de retenue des billes sont formées, d'une part, par une table déplaçable transversalement et munie d'au moins une broche horizontale de support d'une cage à billes et déplaçable en rotation et, d'autre part, au moins une buse de découpage des lumières par faisceau d'électrons à haute densité d'énergie, disposée au-dessus de ladite broche et déplaçable verticalement.

Selon d'autres caractéristiques de l'invention:
- la table comporte deux broches horizontales et parallèles supportant chacune une cage à billes,
- l'installation comprend deux buses de découpage par faisceau d'électrons à haute densité d'énergie, disposées chacune au-dessus d'une broche.

D'autres caractéristiques et avantages de l'invention apparaîtront au cours de la description qui va suivre, faite en référence aux dessins annexés, sur lesquels:
- la figure 1 est une vue schématique en coupe transversale d'un joint de transmission homocinétique muni d'une cage à billes fabriquée par l'installation d'usinage selon l'invention,
- la figure 2 est une vue en perspective d'une cage à billes fabriquée par l'installation d'usinage selon l'invention,
- la figure 3 est une vue en coupe transversale de la cage à billes,
- la figure 4 est une vue schématique en élévation des moyens d'usinage des lumières dans la cage à billes,
- la figure 5 est une vue schématique de côté des moyens d'usinage des lumières dans la cage à billes.

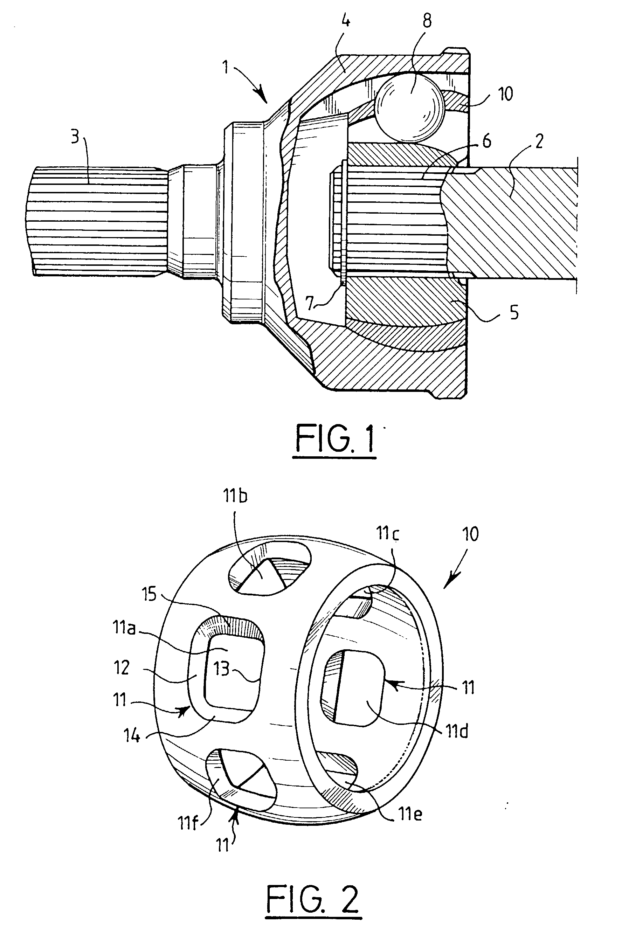

Sur la figure 1, on a représenté schématiquement un joint de transmission homocinétique désigné dans son ensemble par la référence 1 et destiné à relier deux arbres d'un véhicule automobile, à savoir un demi-arbre moteur 2 transversal et une fusée de roue 3.

Ce joint homocinétique 1 comprend essentiellement un élément extérieur 4 en forme de cloche venue de matière avec la fusée 3 et un élément intérieur 5 adapté pour se fixer sur le demi-arbre moteur 2 au moyen de cannelures 6 et d'un circlips 7.

Les éléments extérieur et intérieur, respectivement 4 et 5, sont montés l'un dans l'autre par l'intermédiaire d'une cage à billes 10.

Ainsi que représenté à la figure 2, la cage. 10 est formée par une portion de tube comportant une surface extérieure en forme de sphère et une surface intérieure également en forme de sphère.

Cette cage 10 comporte également des lumières 11 uniformément réparties sur le pourtour de ladite cage qui sont destinées à retenir des billes 8, comme représenté à la figure 1.

Les billes 8 coopèrent avec des gorges, non représentées, ménagées, d'une part, dans la cavité de l'élément extérieur 4 et, d'autre part, sur la surface périphérique de l'élément intérieur 5.

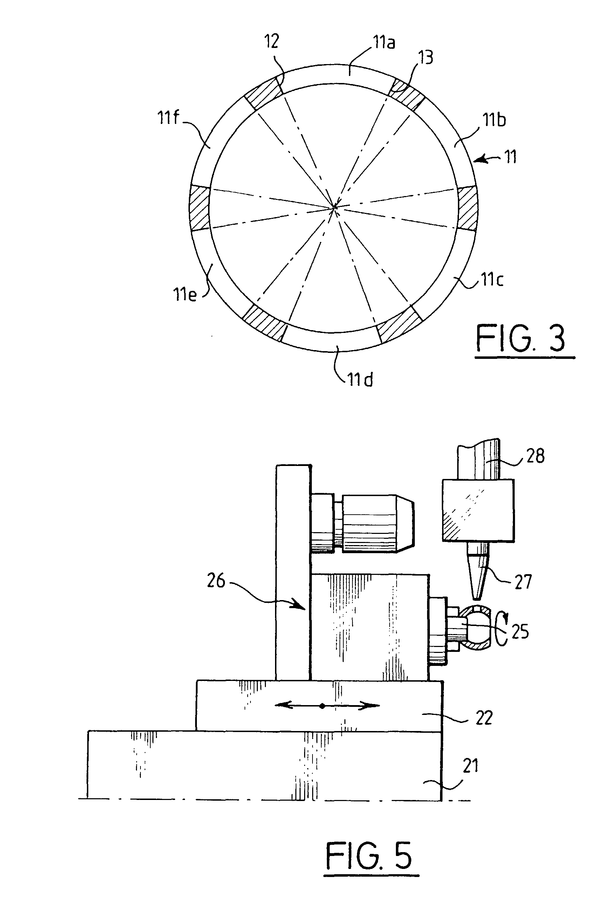

Dans l'exemple de réalisation représenté sur les figures 2 et 3, les lumières 11 sont au nombre de six, respectivement 11a, 11b...11f, comportant chacune deux faces longitudinales, respectivement 12 et 13, et deux faces latérales, respectivement 14 et 15.

Comme représenté à la figure 3, les faces latérales 14 et 15 des lumières 11a, 11b...11f convergent toutes vers le centre de la cage à billes 10.

Par ailleurs, l'une des lumières 11 par exemple la lumière 11a possède des dimensions supérieures aux autres lumières 11b...11f de manière à pouvoir monter l'élément intérieur 5 de ladite cage à billes 10.

Le procédé d'usinage de la cage à billes 10 consiste à découper un lopin 9 dans un tube, à former successivement la face extérieure du lopin 9 pour lui donner la forme d'une sphère et la face intérieure dudit lopin pour lui donner également la forme d'une sphère et à réaliser dans le lopin les lumières 11 de retenue des billes 8.

Ensuite, le procédé consiste à effectuer un traitement thermique de la cage à billes 10 et à effectuer un usinage de finition de la sphère extérieure et de la sphère intérieure de ladite cage à billes 10.

Selon l'invention, les lumières 11 de retenue des billes 8 de la cage à billes 10 sont réalisées par découpage au moyen d'un faisceau d'électrons à haute densité d'énergie.

Pour cela, l'installation d'usinage de la cage à billes 10 comporte des moyens de découpage de lopin dans un tube, des moyens de formage successivement de la face extérieure et de la face intérieure de chaque lopin pour leur donner la forme d'une sphère et des moyens d'usinage dans lesdits lopins 9 de lumière 11 de retenue des billes 8.

Cette installation comporte également des moyens de traitement thermique de la cage à billes 10 et des moyens d'usinage de finition de la sphère extérieure et de la sphère intérieure de ladite cage à billes 10.

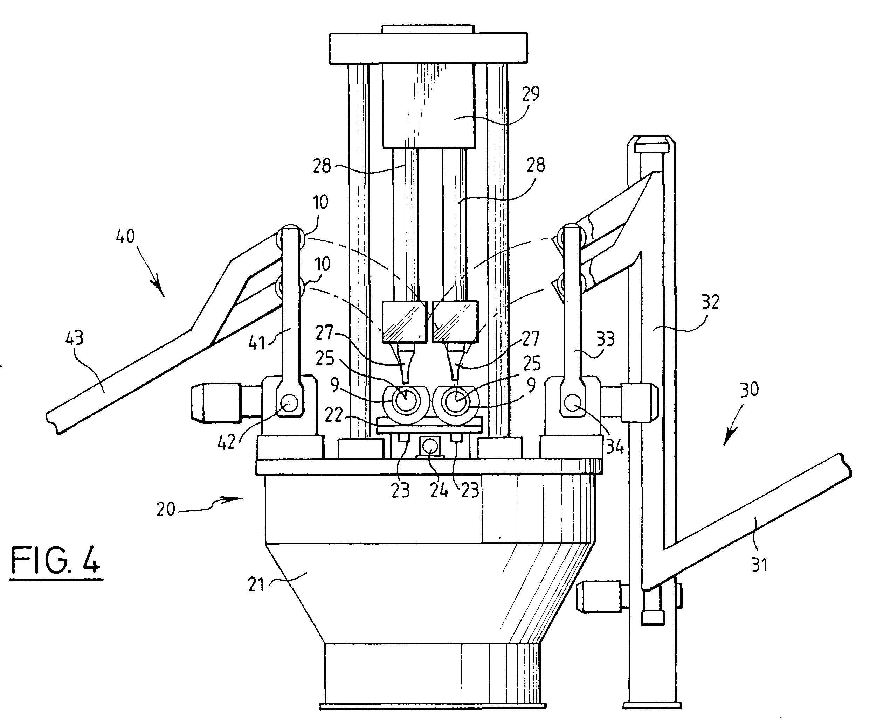

Sur les figures 4 et 5, on a représenté uniquement des moyens d'usinage dans le lopin 9 des lumières 11 de retenue des billes 8.

Ces moyens d'usinage sont formés par un ensemble désigné par la référence 20 qui comporte un bâti 21 dont la surface supérieure est pourvue d'une table 22 déplaçable transversalement par l'intermédiaire par exemple de glissières 23 et d'un système 24 classique constitué d'un ensemble écrou et vis sans fin.

La table 22 supporte deux broches 25 parallèles destinées à recevoir chacune un lopin 9 destiné à former chacun une cage à billes 10.

Ainsi que représenté à la figure 5, chaque broche 25 est entraînée en rotation par exemple par un ensemble moto-réducteur 26.

Les moyens d'usinage des lumières 11 comportent également deux buses 27 de découpage des lumières 11 dans les lopins 9 par faisceau d'électrons à haute densité d'énergie.

Ainsi que représenté à la figure 4, chaque buse 27 est disposée au-dessus d'une broche 25 et est montée à l'extrémité d'une colonne 28 déplaçable verticalement par des moyens appropriés 29.

Comme représenté à la figure 4, l'installation comporte des moyens 30 d'alimentation des lopins 9 sur les broches 25 et des moyens 40 d'évacuation des cages à billes 10 après l'usinage des lumières 11.

Les moyens 30 d'alimentation sont constitués par exemple par un tube d'alimentation 31, un élévateur 32 et un bras de chargement 33 simultanément de deux lopins 9 sur les broches 25.

Ce bras de chargement 33 est monté pivotant autour d'un axe horizontal 34 et comporte à son extrémité libre deux organes de préhension des lopins 9.

Les moyens 40 d'évacuation des cages 10 sont formés par un bras de déchargement 41 monté pivotant autour d'un axe horizontal 42 et qui comporte, à son extrémité libre, deux organes de préhension des cages 10.

Les moyens d'évacuation des cages 10 comportent également un tube de déchargement 43.

Les moyens d'usinage des lumières 11 des cages à billes 10 fonctionnent de la manière suivante.

Après découpage des lopins 9 dans un tube et formage des faces extérieure et intérieure desdits lopins 9, ces lopins sont déversés dans le tube de chargement 31, puis transportés par l'élévateur 32 jusqu'au bras de chargement 33.

Le bras de chargement 33 après la préhension de deux lopins 9 pivote autour de l'axe 34 entre une position verticale et une position horizontale de telle manière que ces lopins 9 se trouvent dans l'axe des broches 25.

Ensuite, par déplacement de la table 22, les deux lopins 9 sont transférés sur les broches 25 et le bras de chargement 33 est ramené dans sa position verticale.

Les buses 25 sont descendues à une distance déterminée des lopins 9 et par déplacement transversal de la table 22 et rotation des broches 25, chaque lumière 11 est réalisée successivement sur les deux lopins 9 au moyen des deux faisceaux d'électrons à haute densité d'énergie.

Le déplacement transversal de la table 22 ainsi que la rotation des broches 25 sont programmés en fonction des dimensions des lumières à réaliser.

Après l'usinage des lumières 11, le bras de déchargement 41 pivote pour se positionner horizontalement et les cages à billes 10 sont transférées des broches 25 sur les organes de préhension du bras de déchargement 41 et ce bras de déchargement pivote pour être amené dans une position verticale et les cages à billes 10 sont évacuées par le tube de déchargement 43.

Le cycle recommence pour l'usinage de deux autres lopins et ainsi de suite.

L'usinage des lumières 11 des cages à billes 10 par faisceau d'électrons à haute densité d'énergie présente l'avantage de pouvoir optimiser la forme des lumières ainsi que d'obtenir une grande précision et une grande souplesse d'usinage.

Par ailleurs, l'installation selon l'invention présentant l'avantage de pouvoir usiner les lumières aux justes dimensions ce qui permet d'économiser de la matière et de supprimer toute déformation au moment de l'usinage de ces lumières, tout en conservant les conditions géométriques de la cage à billes après l'usinage de ces lumières.

## Revendications

1. Installation d'usinage d'une cage à billes (10) d'un joint de transmission homocinétique (1), du type comprenant:
- des moyens de découpage d'un lopin (9) dans un tube,
- des moyens de formage de la face extérieure du lopin (9) pour lui donner la forme d'une sphère,
- des moyens de formage de la face intérieure du lopin (9) pour lui donner la forme d'une sphère,
- des moyens d'usinage dans le lopin (9) de lumières (11) de retenue des billes (8), le lopin avec les lumières formant la cage à billes
- des moyens de traitement thermique de la cage à billes (10),
- et des moyens d'usinage de finition de la sphère extérieure et de la sphère intérieure,
caractérisée en ce que les moyens d'usinage des lumières (11) de retenue des billes (8) sont formés, d'une part, par une table (22) déplaçable transversalement et munie d'au moins une broche horizontale (25) de support d'une cage à billes (10) et déplaçable en rotation et, d'autre part, par au moins une buse (27) de découpage des lumières (11) par faisceau d'électrons à haute densité d'énergie, disposée au-dessus de ladite broche (25) et déplaçable verticalement.

2. Installation selon la revendication 1, caractérisée en ce que la table (22) comporte deux broches (25) horizontales et parallèles supportant chacune une cage à billes (10).

3. Installation selon les revendications 1 et 2, caractérisée en ce qu'elle comprend deux buses (27) de découpage par faisceau d'électrons à haute densité d'énergie disposées chacune au-dessus d'une broche (25).

## Patentansprüche

1. Vorrichtung zur Herstellung eines Kugelkäfigs (10) für eine homokinetische Kupplung (1) der Art mit:
- Vorrichtungen zum Ausschneiden eines Rohlings (9) aus einem Rohr,
- Vorrichtungen zum Formpressen der Außenfläche des Rohlings (9), um ihr die Form einer Kugel zu geben,
- Vorrichtungen zum Formpressen der Innenfläche des Rohlings (9), um ihr die Form einer Kugel zu geben,
- Vorrichtungen zur Herstellung von Schlitzlöchern (11) zum Halten der Kugeln (8) in dem Rohling (9), wobei der Rohling mit den Schlitzlöchern den Kugelkäfig bildet,
- Vorrichtungen zur Wärmebehandlung des Kugelkäfigs (10),
- und Vorrichtungen zur Endbearbeitung der äußeren Kugel und der inneren Kugel,
dadurch gekennzeichnet, daß die Vorrichtungen zur Herstellung der Schlitzlöcher (11) zum Halten der Kugeln (8) einerseits von einer quer verschiebbaren Platte (22), welche mit wenigstens einer herizontalen und in Drehung bewegbaren Spindel (25) zum Tragen eines Kugelkäfigs (10) versehen ist, und andererseits von wenigstens einer Düse (27) zum Ausschneiden der Schlitzlöcher (11) durch Eleketronenstrahl mit hoher Energiedichte, welche oberhalb der Spindel (25) angeordnet und vertikal verschiebbar ist, gebildet sind.

2. Vorrichtung gemäß Anspruch 1, dadurch gekennzeichnet, daß die Platte (22) zwei horizontale und parallele Spindeln (25) aufweist, welche jeweils einen Kugelkäfig (10) tragen.

3. Vorrichtung gemäß den Ansprüchen 1 und 2, dadurch gekennzeichnet, daß sie zwei Düsen (27) zum Ausschneiden durch Elektronenstrahl mit hoher Energiedichte aufweist, welche jeweils oberhalb einer Spindel (25) angeordnet sind.

## Claims

1. Apparatus for machining a ball bearing cage (10) of a homokinetic transmission joint (1), of the type comprising:
- means for cutting out a billet (9) inside a tube,
- means for forming the outer surface of the billet (9) to give it a spherical shape,
- means for forming the inner surface of the billet (9) to give it a spherical shape,
- means for machining openings (11) in the billet (9) for holding ball bearings (8), the billet with the openings forming the ball bearing cage,
- means for heat-treating the ball bearing cage (10),
- and machining means for finishing the outer sphere and the inner sphere,
characterised in that the means for machining the openings (11) for holding the ball bearings (8) are formed, on the one hand, by a transversely movable table (22) which is provided with at least one horizontal support spindle (25) for a ball bearing cage (10) and is rotationally movable and, on the other hand, by at least one nozzle (27) for cutting out the openings (11) using a high energy density electron beam which is located above said spindle (25) and vertically movable.

2. Apparatus according to claim 1, characterised in that the table (22) has two parallel horizontal spindles (25) each supporting a ball bearing cage (10).

3. Apparatus according to claims 1 and 2,
characterised in that it comprises two high energy density electron beam cutting nozzles (27) each located above a spindle (25).
